# EUROPEAN PATENT SPECIFICATION

(11) **EP 4 342 786 B1**
(45) Date of publication and mention of the grant of the patent: **06.05.2026**
(21) Application number: 23182246.1
(22) Date of filing: 29.06.2023
(51) Int. Cl.: B63B 79/40

(54) **INFORMATION PROCESSING APPARATUS AND VESSEL**
INFORMATIONSVERARBEITUNGSVORRICHTUNG UND SCHIFF
APPAREIL DE TRAITEMENT D'INFORMATIONS ET RÉCIPIENT

(30) Priority: 04.08.2022 JP 2022124507
(43) Date of publication of application: 27.03.2024
(73) Proprietor: Sumitomo Heavy Industries Marine & Engineering Co., Ltd., Tokyo 141-6025 (JP)
(72) Inventor: ARAI, Yuji, Kanagawa, 237-8555 (JP); MASUTANI, Akihiko, Kanagawa, 237-8555 (JP)
(74) Representative: Louis Pöhlau Lohrentz

(56) References cited:
- DE-A1- 102013 105 502
- JP-A- 2013 134 089
- US-A1- 2013 220 191
- US-A1- 2022 214 171

## Description

### BACKGROUND OF THE INVENTION

### Field of the Invention

The present invention relates to an information processing apparatus that calculates a route of a vessel including a wind power propulsion unit configured to propel a hull by wind power. Furthermore, the present invention relates to a vessel.

### Description of Related Art

As a conventional information processing apparatus that calculates a route for a vessel, an apparatus described in Japanese Unexamined Patent Publication No. 2013-134089 is known. The information processing apparatus acquires past weather/hydrographic condition data in an area where a vessel can operate, and calculates an optimal route. United States Patent Publication No. 2022/214171 discloses systems and methods for substantially automated and environmentally compensated passage planning for mobile structures. German Patent Publication No. 10 2013 105502 discloses a method for storing energy on a watercraft, in which energy is recorded and stored during travel of the watercraft. United States Patent Publication No. 2013/220191 discloses a ship comprising a plurality of Magnus rotors.

### SUMMARY OF THE INVENTION

Here, the information processing apparatus described above proposes a route for avoiding a windy area, but such a route is not always suitable for a vessel propelled by using wind power. That is, in the information processing apparatus described above, it may not be possible to propose a route that maximizes thrust due to a wind or a route that can maximize reduction of fuel consumption by using a wind. In addition, in the information processing apparatus described above, operation information of another route operated in advance of a route of a vessel is considered. However, the information processing apparatus can consider only weather and hydrographic condition in a narrow linear range operated by the preceding vessel. In a case of calculating a route of a vessel propelled by using wind power, it may be possible to reduce fuel consumption by using a route that bypasses a great circle route, and it is needed to consider weather and hydrographic condition of an area with a wide range.

Therefore, an object of the present invention is to provide an information processing apparatus capable of calculating an appropriate route for a vessel including a wind power propulsion unit for propelling a hull by a wind power, and a vessel.

The invention is set out in the appended set of claims.

With the information processing apparatus according to the present invention, the information acquisition unit acquires the area information that is created based on the operation information acquired in each area by another vessel and includes the information relating to at least one of the weather and the hydrographic condition in the area. Since the area information is information based on the actual operation information of another vessel, the area information more accurately indicates a state of the weather and hydrographic condition in each area than a weather/hydrographic condition forecast. Therefore, the route calculation unit can calculate the route suitable for propulsion by wind power in consideration of the accurate state of the weather and hydrographic condition for an area covering a wide range. From the above, it is possible to calculate an appropriate route for the vessel including the wind power propulsion unit configured to propel the hull by wind power.

The route calculation unit may evaluate the route based on the area information. Accordingly, the route calculation unit can accurately evaluate the route in consideration of the state of the weather and hydrographic condition based on the actual operation information of another vessel.

The route calculation unit may create a plurality of candidate routes and select the route suitable for propulsion by wind power from among the candidate routes. In this case, it is possible to easily select the route suitable for propulsion by wind power.

The route calculation unit may create the candidate route based on at least one of the area information and a weather/hydrographic condition forecast. Accordingly, the route calculation unit can create a candidate route suitable for propulsion by wind power in consideration of the weather and the hydrographic condition.

According to the invention, the route calculation unit may calculate the route based on sailing performance calculated in consideration of at least one of a tacking effect and a gybing effect while using a polar diagram. In this case, it is possible to select a direction with a wind direction 0° or a direction with a wind direction 180°, in which the propulsive force is difficult to obtain, as an advancing direction from the polar diagram.

According to the present invention, it is possible to provide an information processing apparatus capable of calculating an appropriate route for a vessel including a wind power propulsion unit for propelling a hull by a wind power, and a vessel.

### BRIEF DESCRIPTION OF THE DRAWINGS

Fig. 1 is a block diagram illustrating an information processing system including an information processing apparatus according to the present embodiment.
Fig. 2 is a schematic diagram illustrating a state of communication in the information processing system.
Fig. 3 is a schematic cross-sectional view illustrating an example of a vessel.
Figs. 4A and 4B are diagrams for describing a wind power propulsion unit.
Fig. 5 is a diagram illustrating an example of a candidate route for the vessel.
Fig. 6 is a flowchart illustrating processing content in a case where a terminal on the ground creates area information.
Fig. 7 is a flowchart illustrating processing content in a case where the information processing apparatus creates a sailing performance database created in consideration of the area information.
Fig. 8 is a flowchart illustrating processing content in a case where the information processing apparatus calculates a route.
Fig. 9 is a diagram illustrating an example of a polar diagram.
Fig. 10 is a diagram for explaining a polar diagram.
Figs. 11A and 11B are diagrams for explaining a tacking effect.
Figs. 12A and 12B are diagrams for explaining a gybing effect.
Fig. 13A illustrates a fuel consumption amount for each day of routes, and Fig. 13B illustrates a total fuel consumption amounts.

### DETAILED DESCRIPTION OF THE INVENTION

Hereinafter, a preferred embodiment of the present invention will be described in detail with reference to the accompanying drawings. In the following description, the same or corresponding portions will be designated by the same reference numerals, and duplicate description will be omitted.

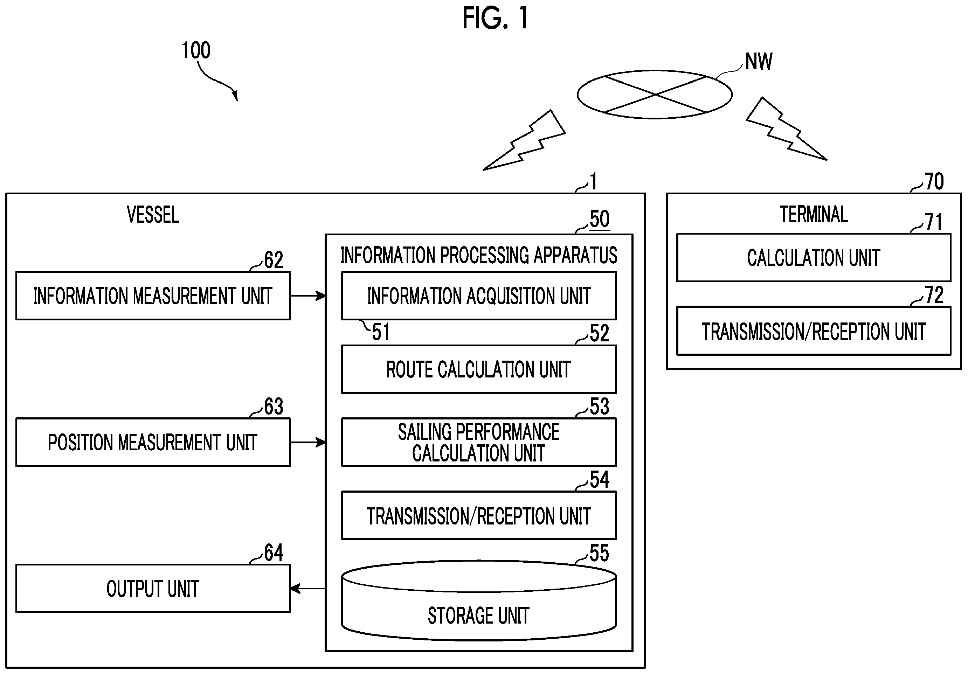

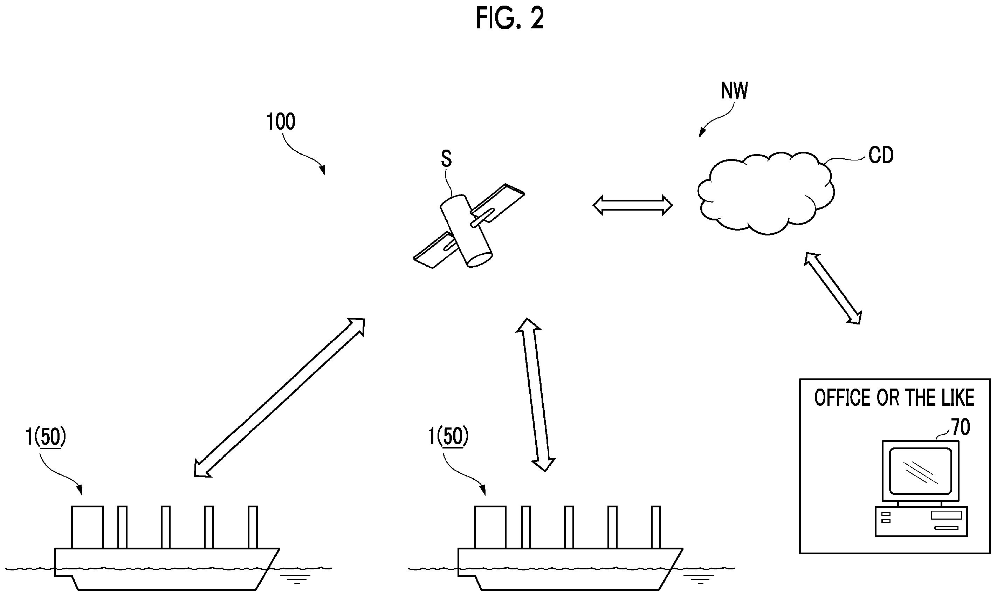

Fig. 1 is a block diagram illustrating an information processing system 100 including an information processing apparatus 50 according to the present embodiment. Fig. 2 is a schematic diagram illustrating a state of communication in the information processing system 100. The information processing system 100 illustrated in Fig. 1 includes an information processing apparatus 50 mounted on a vessel 1, and a terminal 70. Information can be transmitted to and received from the information processing apparatus 50 and the terminal 70 via a network NW. In the present embodiment, as shown in Fig. 2, the network NW is configured of satellite communication by an artificial satellite S, communication using a cloud server CD, or the like. In addition, the terminal 70 is installed outside the vessel 1. Here, the terminal 70 is installed in an office or the like on land (or at sea). Accordingly, a crew of the vessel 1 can share information with a person outside the vessel via the network NW and the terminal 70. Although only one vessel 1 is shown in Fig. 1, the information processing system 100 may include information processing apparatuses 50 of a plurality of vessels 1. In addition, a size of each vessel 1 is also not particularly limited, and may be any one of a small-sized vessel, a medium-sized vessel, and a large-sized vessel. A large number of terminals 70 may also exist.

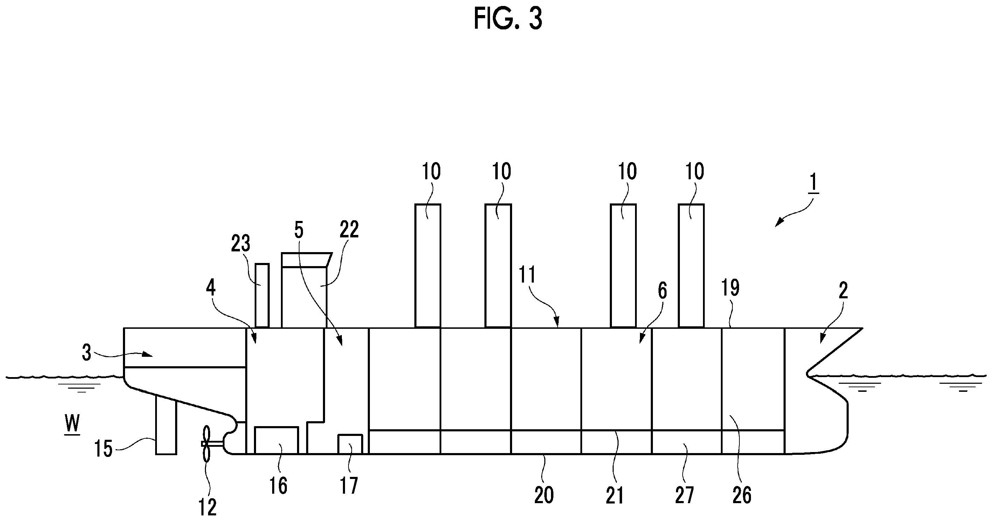

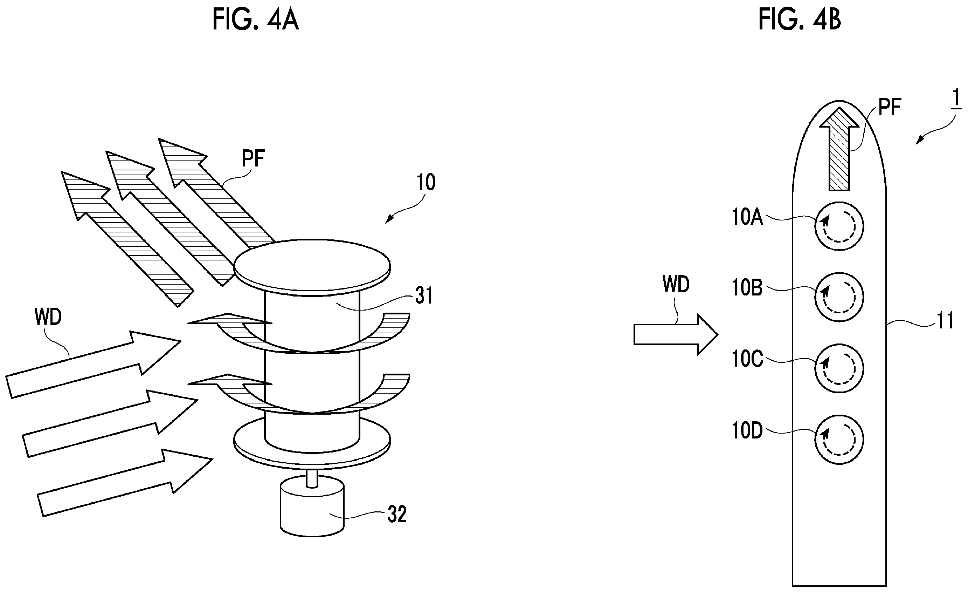

Here, the vessel 1 provided with the information processing apparatus 50 will be described with reference to Figs. 3 and 4. Fig. 3 is a schematic cross-sectional view illustrating an example of the vessel 1. The vessel 1 is a vessel that carries, for example, a petroleum-based liquid cargo such as crude oil or liquid gas, and is, for example, an oil tanker. The vessel is not limited to an oil tanker, and may be, for example, a bulk carrier or a vessel from other various types of vessels.

As shown in Fig. 3, the vessel 1 includes a hull 11, a propeller 12, and a plurality of wind power propulsion units 10. The hull 11 has a bow portion 2, a stern portion 3, an engine compartment 4, a pump compartment 5, and a cargo compartment 6. An upper deck 19 is provided at an upper portion (or inside the vessel) of the hull 11. The bow portion 2 is located on a front side of the hull 11. The stern portion 3 is located on a rear side of the hull 11. In a case where the vessel is other than a tanker, the pump compartment 5 may be omitted.

The bow portion 2 has, for example, a shape of which the goal is to reduce wave-making resistance in a state of full-load draft. The propeller 12 mechanically generates thrust of the hull 11, and for example, a screw shaft is used as the propeller 12. The propeller 12 is installed below a waterline (water surface of a sea W) at the stern portion 3 during propulsion. In addition, a rudder 15 for adjusting a propulsion direction is installed below the waterline at the stern portion 3. In the example shown in Fig. 3, the vessel 1 includes the propeller 12. The number of the propellers 12 is not limited to one, and a plurality of propellers 12 may be disposed.

The engine compartment 4 is provided at a position adjacent to a bow side of the stern portion 3. The engine compartment 4 is a section for disposing a main engine 16 for applying a driving force to the propeller 12. On the upper deck 19, a living area 22 and an exhaust chimney 23 are provided above the engine compartment 4. The pump compartment 5 is provided at a position adjacent to a bow side of the engine compartment 4. The pump compartment 5 is a section in which the pump 17 or the like is disposed. The cargo compartment 6 is provided between the bow portion 2 and the pump compartment 5. The cargo compartment 6 is a section for accommodating petroleum-based cargo. The cargo compartment 6 is divided into a plurality of cargo oil tanks 26 and a plurality of ballast tanks 27 by adopting a double hull structure configured of an outer plate 20 and an inner bottom plate 21. The cargo oil tank 26 is loaded with petroleum-based cargo carried by the vessel 1. The ballast tank 27 accommodates an amount of ballast water corresponding to a size or the like of the vessel. In a case where the vessel is other than a tanker, a structure different from that of the cargo oil tank 26 is provided.

The wind power propulsion unit 10 is a mechanism for propelling the hull 11 by wind power. In the present embodiment, a rotor type wind power propulsion mechanism is adopted as the wind power propulsion unit 10. A plurality (here, four) of the wind power propulsion units 10 are provided on the upper deck 19 of the hull 11 such that the wind power propulsion units are lined up in a front-rear direction. As shown in Fig. 4A, the wind power propulsion unit 10 includes a columnar rotor sail 31 extending in a vertical direction and an electric motor 32 that rotates the rotor sail 31. In a case where a wind WD blows into the rotor sail 31 from a lateral side, a rotational direction of the rotor sail 31 and a direction of the wind WD are opposite to each other on a rear side, and the rotational direction of the rotor sail 31 and the direction of the wind WD coincide with each other on a front side. Thus, as a pressure difference is generated on the front side and the rear side of the rotor sail 31, thrust PF toward the front side is generated (Magnus effect). As shown in Fig. 4B, as the wind WD blows from the side to the hull 11, the hull 11 moves forward due to the thrust PF of each wind power propulsion unit 10. Here, four wind power propulsion units "10A", "10B", "10C", and "10D" are provided as the wind power propulsion unit 10.

As shown in Fig. 1, the vessel 1 includes an information measurement unit 62, a position measurement unit 63, an output unit 64, and the information processing apparatus 50.

The information measurement unit 62 measures information relating to weather and hydrographic condition at a position where the vessel 1 is operating. The information measurement unit 62 measures information such as a wind (wind direction or speed), a wind wave, a swell, a tidal current, a sea current, a water temperature, a temperature, and an atmospheric pressure as the information relating to weather and hydrographic condition. The information measurement unit 62 transmits the measured information to the information processing apparatus 50. The information measured by the information measurement unit 62 is accumulated in a storage unit 55. The information measurement unit 62 can measure information relating to a wind by means of a wind direction and speed sensor. The information measurement unit 62 can measure a wind wave, a swell, a tidal current, and a sea current by means of a radar type wave height meter and an ultrasonic type tidal current meter. The information measurement unit 62 can measure a water temperature and a temperature by means of a thermometer, and can measure an atmospheric pressure by means of a barometer.

The position measurement unit 63 measures a position of the vessel 1. The position measurement unit 63 is configured of, for example, a position measurement system such as GPS. The position measurement unit 63 transmits the measured position information to the information processing apparatus 50. The position information measured by the position measurement unit 63 is accumulated in the storage unit 55. The storage unit 55 may store the position information in a state of being associated with the information relating to the weather and the hydrographic condition. In addition, the position measurement unit 63 can also measure a speed of the vessel 1 from the position information.

The output unit 64 is a device that outputs various types of information to a crew of the vessel 1. The output unit 64 is configured of a monitor, a speaker, or the like. The output unit 64 may output various types of information such as a route proposed by the information processing apparatus 50.

The information processing apparatus 50 is an apparatus that calculates a route of the vessel 1 including the wind power propulsion unit 10 configured to propel the hull by wind power. The information processing apparatus 50 is an apparatus capable of uploading operation information for a position where operation is actually performed to the cloud server CD on the network NW. The information processing apparatus 50 is an apparatus capable of communicating with the terminal 70 via the network NW. The information processing apparatus 50 includes a processor, a memory, a storage, a communication interface, and a user interface, and is configured as a general computer. The processor is a calculation device such as a central processing unit (CPU). The memory is a storage medium such as a read-only memory (ROM) or a random-access memory (RAM). The storage is a storage medium such as a hard disk drive (HDD). The communication interface is a communication device that implements data communication. The user interface is an output device such as a liquid crystal display, a speaker or the like, and an input device such as a keyboard, a touch panel, a microphone, or the like. The processor integrates the memory, the storage, the communication interface, and the user interface to implement functions of the information processing apparatus 50 described later. The information processing apparatus 50 implements various functions by, for example, loading a program stored on the ROM into the RAM and by executing the program loaded in the RAM using the CPU. The information processing apparatus 50 may be configured of a plurality of computers.

As shown in Fig. 1, the information processing apparatus 50 includes an information acquisition unit 51, a route calculation unit 52, a sailing performance calculation unit 53, a transmission/reception unit 54, and the storage unit 55.

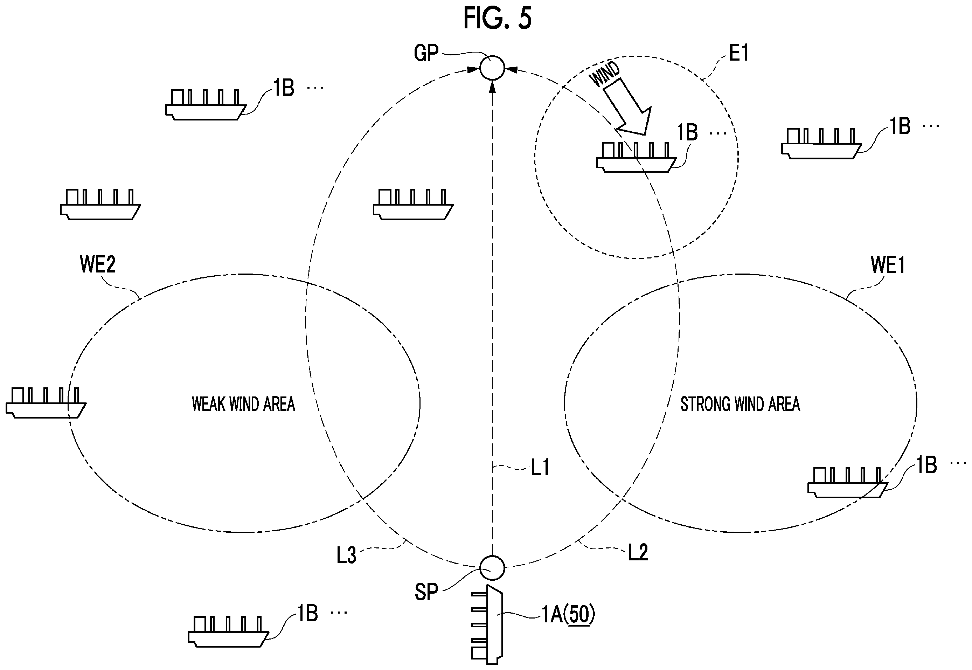

The information acquisition unit 51 acquires various types of information. The information acquisition unit 51 acquires various types of information relating to the weather and the hydrographic condition from the information measurement unit 62, and acquires the position information of the vessel 1 from the position measurement unit 63. The information acquisition unit 51 stores the acquired information in the storage unit 55. In addition, the information acquisition unit 51 acquires information from an outside of the vessel 1 via the network NW. The information acquisition unit 51 acquires area information that is created based on the operation information acquired in each area by another vessel 1B (refer to Fig. 5) and includes information relating to at least one of the weather and the hydrographic condition in each area. For example, as shown in Fig. 5, a large number of other vessels 1B exist in the sea in addition to an own vessel 1A. Since the vessels 1B upload actual operation information to the cloud server CD in real time in each area, the vessels 1B function as sensors for measuring information relating to the weather and the hydrographic condition. Details of the area information will be described later.

The route calculation unit 52 calculates a route suitable for propulsion by wind power based on the area information. The route calculation unit 52 evaluates a route based on the area information. The route calculation unit 52 creates a plurality of candidate routes, and selects the route suitable for propulsion by wind power from among the candidate routes. For example, in an example shown in Fig. 5, after setting a current location SP and a destination GP, the route calculation unit 52 sets a great circle route L1 that is a shortest route from the current location SP to the destination GP. The route calculation unit 52 creates a candidate route based on at least one of the area information and a weather/hydrographic condition forecast. In the example shown in Fig. 5, a route L2 that passes through a strong wind area WE1 from the current location SP and a route L3 that passes through a weak wind area WE2 are created as candidate routes. The great circle route L1 is also one of the candidate routes. Therefore, the route calculation unit 52 evaluates each of the routes L1, L2, and L3 based on area information of the area through which each route L1, L2, and L3 passes. In addition, the route calculation unit 52 selects the route suitable for propulsion by wind power from among the routes L1, L2, and L3 that are candidate routes. The details of the processing content of the route calculation unit 52 will be described later.

The sailing performance calculation unit 53 calculates sailing performance of the vessel 1 in consideration of at least one of a tacking effect and a gybing effect while using a polar diagram. After calculating the sailing performance of the vessel 1, the sailing performance calculation unit 53 transmits the sailing performance to the storage unit 55. Accordingly, the route calculation unit 52 can calculate a route based on the sailing performance by reading the sailing performance from the storage unit 55 in a case of calculating a route. Details of sailing performance will be described later.

Returning to Fig. 1, the transmission/reception unit 54 transmits and receives various types of information to and from the outside of the vessel 1 via the network NW. The transmission/reception unit 54 may acquire area information including weather/hydrographic condition real-time data for each area where the vessel 1 can operate via the network NW.

The transmission/reception unit 54 transmits the operation information for the position where the operation is actually performed to the outside of the vessel 1. Although a transmission means is not particularly limited, the transmission/reception unit 54 transmits the operation information to the cloud server CD by using satellite communication or the like.

The terminal 70 includes a calculation unit 71 and a transmission/reception unit 72. The transmission/reception unit 72 transmits and receives various types of information to and from each vessel 1 via the network NW. The calculation unit 71 performs various calculations. The calculation unit 71 calculates the area information that includes the information relating to at least one of the weather and the hydrographic condition in each area, based on the operation information acquired in each area by another vessel. The calculation unit 71 transmits the calculated area information to each vessel 1 via the transmission/reception unit 72 and the network NW.

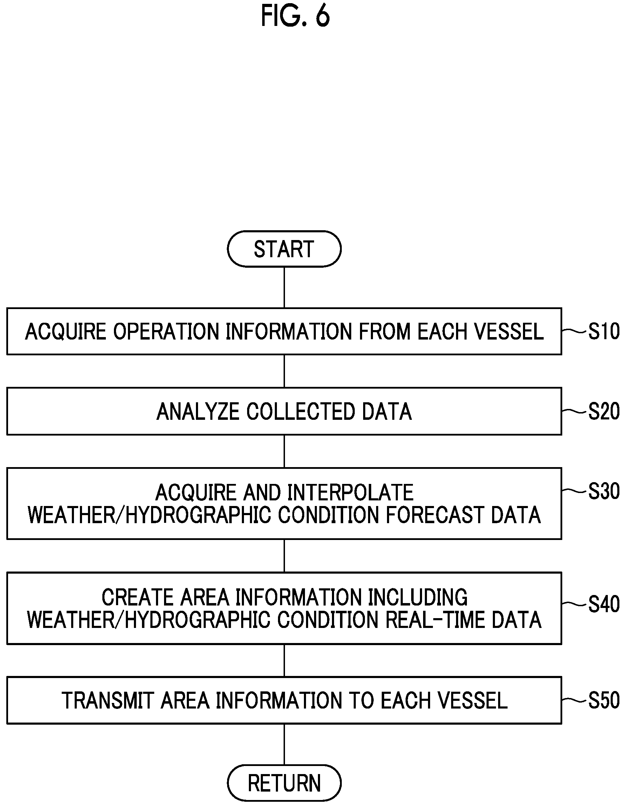

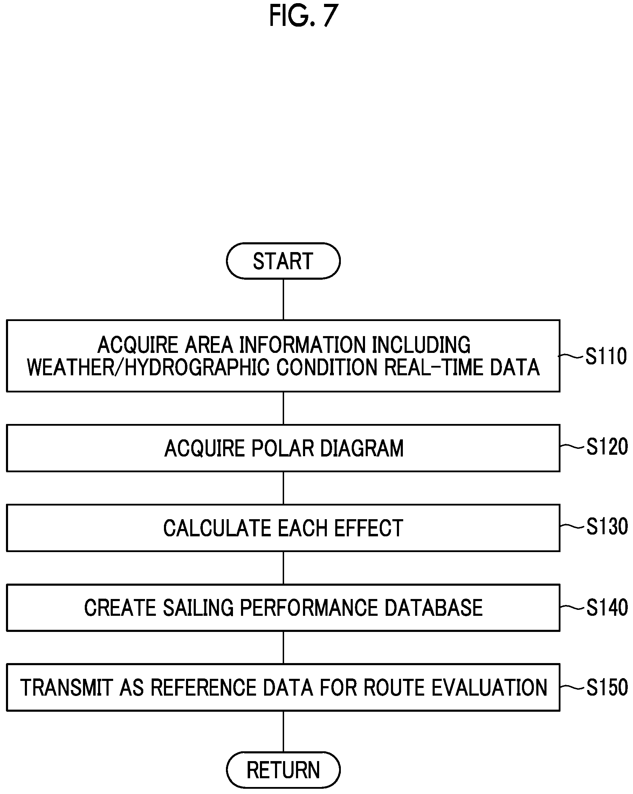

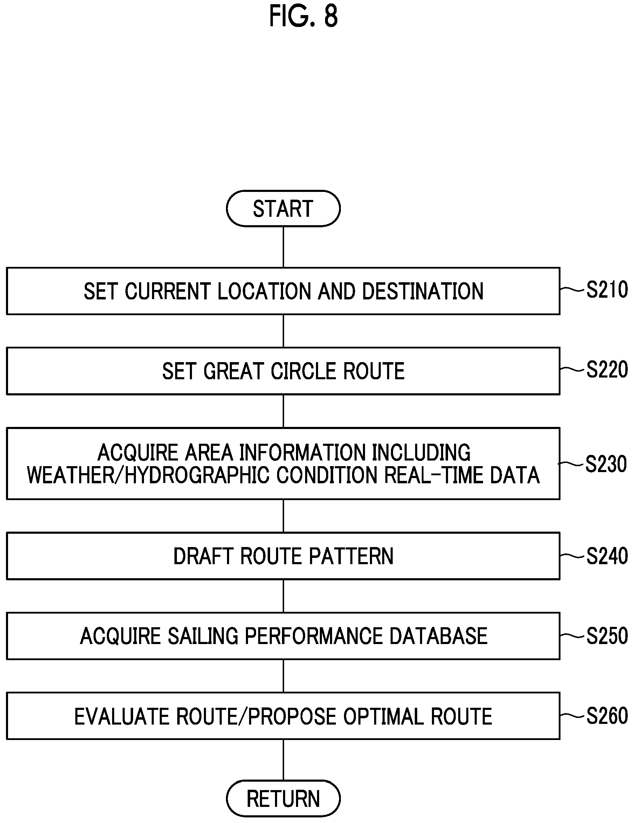

Next, processing content of the information processing system 100 will be described with reference to Figs. 6 to 8. Fig. 6 is a flowchart illustrating processing content in a case where the terminal 70 on the ground creates the area information. Fig. 7 is a flowchart illustrating processing content in a case where the information processing apparatus 50 creates a sailing performance database in consideration of the area information. Fig. 8 is a flowchart illustrating processing content in a case where the information processing apparatus 50 calculates a route.

Processing of Fig. 6 is processing that is repeatedly executed in real time by the terminal 70 on the ground. In a stage prior to the processing, the plurality of vessels 1 scattered in each area of a map shown in Fig. 5 transmit the operation information to the cloud server CD (refer to Fig. 2). The operation information includes information such as a wind, a wind wave, a swell, a tidal current, a sea current, a water temperature, a temperature, and an atmospheric pressure at the position of the vessel 1. First, the transmission/reception unit 72 of the terminal 70 acquires operation information from each vessel 1 from the cloud server CD (step S10). At this point in time, a data group of the operation information by the plurality of vessels 1 is configured as an aggregate of point data at the position where each vessel 1 exists.

Next, the calculation unit 71 of the terminal 70 calculates the weather/hydrographic condition real-time data in each area by analyzing the operation information collected from each vessel 1 (step S20). The calculation unit 71 acquires information on the weather and the hydrographic condition in an area E1 (refer to Fig. 5) around the vessel 1 from the operation information of the vessel 1. The calculation unit 71 edits the weather/hydrographic condition real-time data in the area E1 so as to be in a form that facilitates the evaluation of a route. For example, the calculation unit 71 performs editing such as indicating a wind speed in the area E1 with a contour line. The calculation unit 71 performs such editing of data of a surrounding area based on the operation information of the vessel 1, for all the vessels 1. In this way, the calculation unit 71 can acquire an aggregate of surface data indicating the weather and the hydrographic condition in the area where each vessel 1 exists by analyzing the aggregate of point data from the plurality of vessels 1.

In the map shown in Fig. 5, there is also an area where the vessel 1 is not operating. The transmission/reception unit 72 acquires weather/hydrographic condition forecast data, and the calculation unit 71 interpolates the area where the vessel 1 is not operating with the weather/hydrographic condition forecast data (step S30). Accordingly, the calculation unit 71 can create area information including the weather/hydrographic condition real-time data for an entire area of the map shown in Fig. 5 (step S40). The transmission/reception unit 72 transmits the area information to each vessel 1 via the network NW (refer to Fig. 2) (step S50).

Next, processing content of Fig. 7 will be described. Processing of Fig. 7 is processing that is repeatedly executed by the information processing apparatus 50 of the own vessel 1A. The sailing performance calculation unit 53 of the information processing apparatus 50 acquires the area information including the weather/hydrographic condition real-time data for each area in the map of Fig. 5 from the cloud server CD via the transmission/reception unit 54 (step S110).

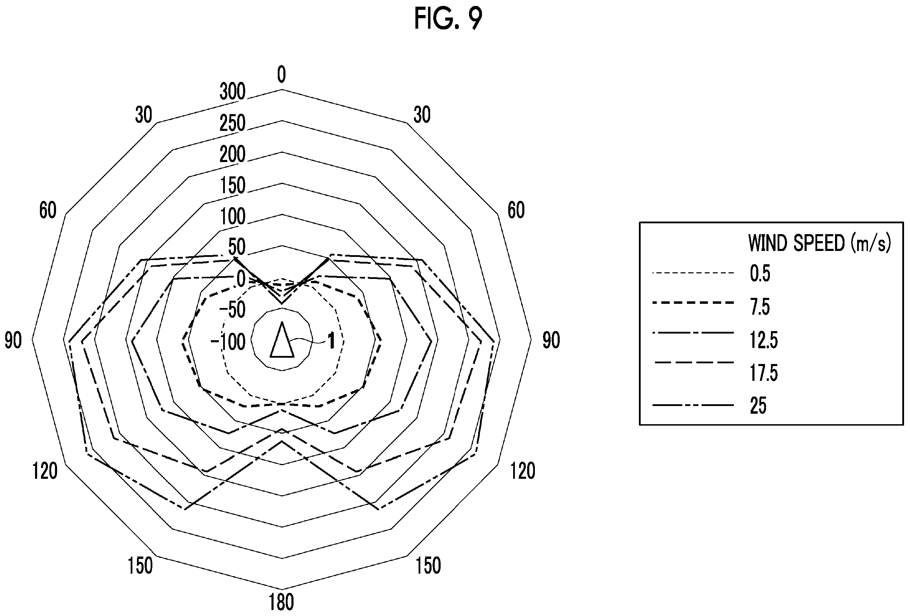

Next, the sailing performance calculation unit 53 acquires a polar diagram of the own vessel 1A (step S120). Since a polar diagram changes depending on sizes and the number of a rotor type wind power propulsion units 10 of the vessel 1, each vessel 1 has a polar diagram individually. Fig. 9 shows an example of a polar diagram. A number assigned in a circumferential direction of the polar diagram indicates a wind direction (°) in a case where an advancing direction of the vessel 1 is 0°. A number assigned in a radial direction of the polar diagram is a force component (kN) that is thrust for the vessel 1. There are a plurality of polar diagrams corresponding to wind speeds.

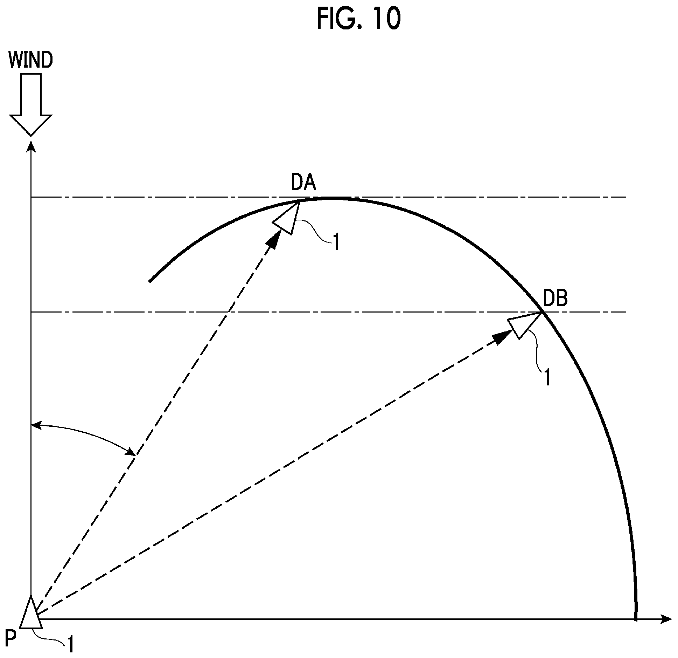

As shown in Fig. 10, in a case of moving the vessel 1 upwind, a path toward an advancing direction DB from a reference position P of the vessel 1 has a higher vessel speed than a path toward an advancing direction DA. However, it is the path toward the advancing direction DA that reaches upwind earlier. In this way, by using a polar diagram, it is possible to identify which advancing direction the vessel 1 should be propelled toward in a case of directing the vessel 1 to a target location. In addition, in a case where a wind direction with respect to the vessel 1 changes as a wind shifts, the advancing direction of the vessel 1 can be adjusted in accordance with a shift of the wind to reach upwind quickly.

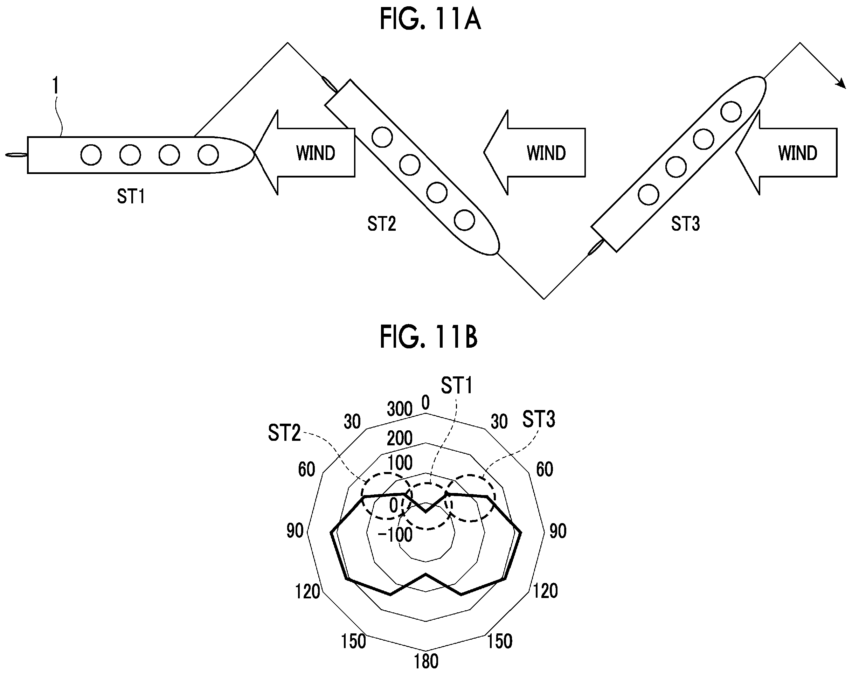

Here, as shown in Fig. 9, sufficient thrust cannot be obtained in the 0° direction (headwind) or a 180° direction (tailwind). Therefore, in a normal sailing mode, it is difficult to select the 0° direction or the 180° direction as the advancing direction. However, by using the tacking effect or the gybing effect, it is possible to select the 0° direction or the 180° direction as the advancing direction. Figs. 11A and 11B are schematic diagrams for explaining the tacking effect. In Fig. 11A, it is assumed that a wind is blowing from a right side to a left side of the figure and a destination of the vessel 1 is on the right side of the figure. In this case, in a state ST1, the wind is completely a headwind and no thrust can be obtained (refer to the state ST1 in Fig. 11B). On the other hand, in a case where the vessel 1 advances toward the lower right of the figure as in a state ST2, the wind direction is not 0° and thrust is obtained (refer to the state ST2 in Fig. 11B). In this case, the vessel 1 deviates to the right from an originally desired path. Therefore, the vessel 1 advances toward the upper right as in a state ST3 (refer to the state ST3 in Fig. 11B). Accordingly, by using the tacking effect, it is also possible to select vicinity of 0° as the advancing direction of the vessel 1.

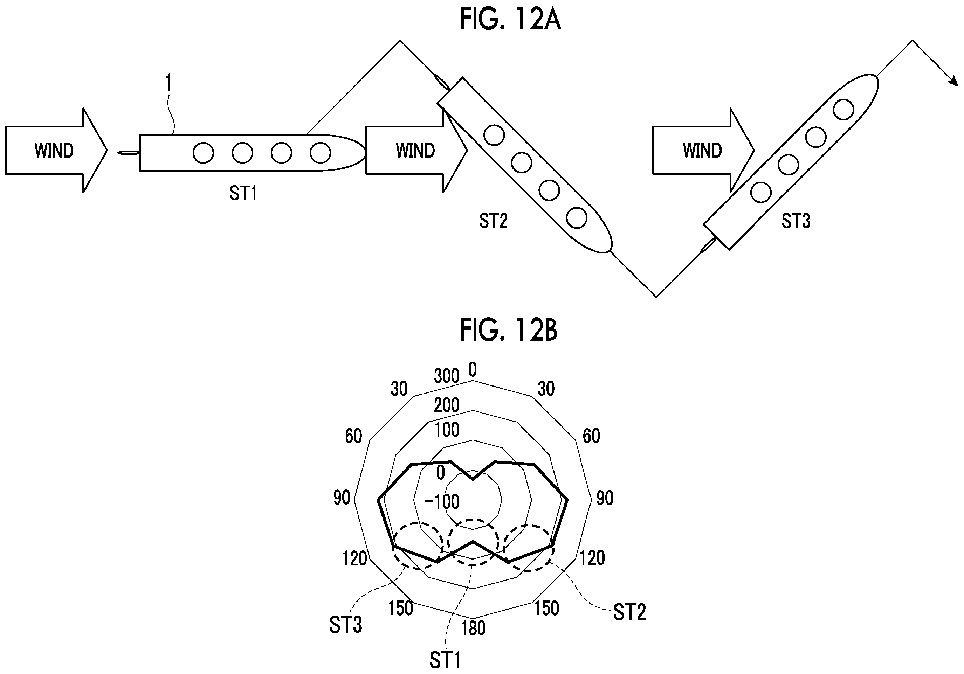

Figs. 12A and 12B are schematic diagrams for explaining the gybing effect. In Fig. 12A, it is assumed that a wind is blowing from a left side to a right side of the figure and a destination of the vessel 1 is on the right side of the figure. In this case, in a state ST1, the wind is completely a tailwind, and thrust obtained is small (refer to the state ST1 in Fig. 12B). On the other hand, in a case where the vessel 1 advances toward the lower right of the figure as in a state ST2, the wind direction is not 180° and thrust is obtained (refer to the state ST2 in Fig. 12B). In this case, the vessel 1 deviates to the right from an originally desired path. Therefore, the vessel 1 advances toward the upper right as in a state ST3 (refer to the state ST3 in Fig. 12B). Accordingly, by using the gybing effect, it is also possible to select vicinity of 180° as the advancing direction of the vessel 1.

Therefore, in a polar diagram, the sailing performance calculation unit 53 calculate a sailing mode in which the vicinity of 0° is set as the advancing direction by using the tacking effect, and a sailing mode in which the vicinity of 180° is set as the advancing direction by using the gybing effect (step S130).

The sailing performance calculation unit 53 creates the sailing performance database in consideration of the weather and the hydrographic condition (step S140). In step S140, the sailing performance calculation unit 53 calculates the sailing performance of the own vessel 1A in each area of the map of Fig. 5, and edits a calculation result as a database. For example, the sailing performance calculation unit 53 acquires a polar diagram in a case where the own vessel 1A exists in each area of the map of Fig. 5. Since the weather/hydrographic condition real-time data is set in each area, the sailing performance calculation unit 53 sets the polar diagram based on a wind direction and a wind speed in each area. For example, since a wind direction and a wind speed of a wind blowing in the area E1 of Fig. 5 are known, for the area E1, the sailing performance calculation unit 53 sets a polar diagram corresponding to the wind direction and the wind speed in the area E1. In addition, the sailing performance calculation unit 53 also calculates each sailing performance in a case of selecting each angle as an advancing direction with respect to the wind in the area E1. The sailing performance calculation unit 53 also calculates sailing performance in a case where the vicinity of 0° is set as the advancing direction by using the tacking effect and in a case where the vicinity of 180° is set as the advancing direction by using the gybing effect. The sailing performance calculation unit 53 transmits the created sailing performance database to the storage unit 55 as reference data for route evaluation (step S150).

Next, processing content of Fig. 8 will be described. Processing of Fig. 8 is executed in a case where a user first determines a start position and a destination. In addition, since an optimal route may change as appropriate, the processing of Fig. 8 may be executed in the middle of a route. The processing is processing that is repeatedly executed at a predetermined timing by the information processing apparatus 50 of the own vessel 1A. The route calculation unit 52 of the information processing apparatus 50 sets a current location and a destination (step S210). In processing of step S210, the start position and the destination set by the user are set at a start of a sailing. In the processing of step S210 executed during the sailing, a current position detected as the current location is set, and in a case where there is no change in the destination, the destination at the start of the sailing is set. Next, as shown in Fig. 5, the route calculation unit 52 sets the great circle route L1 by connecting the current location SP and the destination GP with a shortest line (step S220). Next, the route calculation unit 52 acquires the area information including weather/hydrographic condition real-time data for each area in the map of Fig. 5 from the cloud server CD via the transmission/reception unit 54 (step S230).

The route calculation unit 52 drafts a route pattern (step S240). The route calculation unit 52 creates a route pattern as a candidate route based on at least one of the area information and the weather/hydrographic condition forecast. The route calculation unit 52 may create a route passing through a sea area with a strong/weak wind speed, a route with frequent crosswinds/tailwinds, a route aligning with a sea current, a route with a small wave, and the like as candidate routes. The route calculation unit 52 may consider a route pattern, which is obtained by focusing on a strong wind region in a first half of the sailing and by focusing on a wave in a second half of the sailing, or the like. In the example shown in Fig. 5, the route calculation unit 52 creates the route L2 passing through the strong wind area WE1 and the route L3 passing through the weak wind area WE2 as candidate routes.

The route calculation unit 52 acquires the sailing performance database in consideration of the weather and the hydrographic condition mentioned above from the storage unit 55 (step S250). Next, the route calculation unit 52 performs the route evaluation for candidate routes, selects a route to be adopted from among the candidate routes, and proposes the route as an optimal route (step S260). The route calculation unit 52 evaluates each candidate route based on the sailing performance database. The route calculation unit 52 evaluates a fuel consumption amount, a propulsive force due to the wind, a time required to reach the destination, and the like in a comprehensive way. For example, sailing performance for each area through which the route L2 shown in Fig. 5 passes is stored in the sailing performance database. Therefore, the route calculation unit 52 calculates the fuel consumption amount, the propulsive force, the required time, and the like, based on the sailing performance in each area through which the route L2 passes. In this way, the route calculation unit 52 can evaluate the route L2, covering an entire region from the current location SP to the destination GP. Accordingly, the route calculation unit 52 adopts a route with a minimum fuel consumption amount, a route with a minimum time required to reach the destination, or a route capable of maximizing the propulsive force due to the wind from the routes L1, L2, and L3.

Next, actions and effects of the information processing apparatus 50 according to the present embodiment will be described.

According to the information processing apparatus 50 according to the present embodiment, the information acquisition unit 51 acquires the area information that is created based on the operation information acquired in each area by another vessel 1B and includes the information relating to at least one of the weather and the hydrographic condition in each area. Since the area information is information based on the actual operation information of another vessel 1B, the area information more accurately indicates a state of the weather and hydrographic condition in each area than the weather/hydrographic condition forecast. Therefore, the route calculation unit 52 can calculate the route suitable for propulsion by wind power in consideration of the accurate state of the weather and hydrographic condition for an area covering a wide range. From the above, it is possible to calculate an appropriate route for the vessel 1 including the wind power propulsion unit 10 configured to propel the hull by wind power.

The route calculation unit 52 may evaluate a route based on the area information. Accordingly, the route calculation unit 52 can accurately evaluate the route in consideration of the state of the weather and hydrographic condition based on the actual operation information of another vessel 1B.

The route calculation unit 52 may create a plurality of candidate routes and select the route suitable for propulsion by wind power from among the candidate routes. In this case, it is possible to easily select the route suitable for propulsion by wind power.

The route calculation unit 52 may create a candidate route based on at least one of the area information and the weather/hydrographic condition forecast. Accordingly, the route calculation unit 52 can create a candidate route suitable for propulsion by wind power in consideration of the weather and the hydrographic condition.

The route calculation unit 52 may calculate a route based on the sailing performance calculated in consideration of at least one of the tacking effect and the gybing effect while using the polar diagram. In this case, it is possible to select a direction with the wind direction 0° or a direction with the wind direction 180°, in which the propulsive force is difficult to obtain, as the advancing direction from the polar diagram.

The present invention is not limited to the embodiment described above.

For example, a block configuration shown in Fig. 1 is merely an example, and may be appropriately modified without departing from the concept of the present invention. For example, a location where the terminal 70 shown in Fig. 2 is installed is not particularly limited. In addition, another vessel need only have a function of uploading operation information, and need not have a route calculation unit or the like.

According to the invention, the information processing apparatus includes a display unit (output unit 64 mentioned above) configured to display a fuel consumption reduction amount obtained by the calculated route may be adopted.

As an example of this case, the route calculation unit 52 evaluates each candidate route based on the sailing performance database, and can evaluate the fuel consumption amount, the propulsive force due to the wind, the time required to reach the destination, and the like in the comprehensive way; however, the route calculation unit 52 may further display on the display unit how much the fuel consumption amount has been reduced based on a past actual result after actually arriving at the destination GP. According to the invention, the route calculation unit 52 may display on the display unit how much the fuel consumption amount has been reduced in an actually adopted route compared to the route L1 after actually arriving at the destination GP. Accordingly, the user can identify the fuel consumption amount depending on the route selected this time.

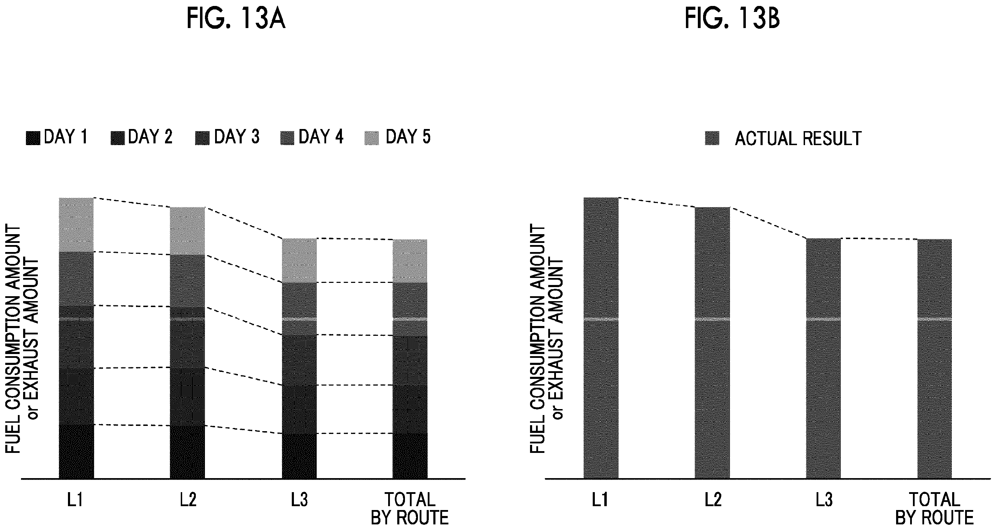

Specifically, as shown in Figs. 13A and 13B, an image showing how much a route of the actual result has been capable of reducing fuel consumption amount compared to another route is displayed. Fig. 13A illustrates a fuel consumption amount for each day of routes, and Fig. 13B illustrates a total fuel consumption amounts.

As another embodiment, it may be displayed which hydrographic condition enables a reduction advantage of a fuel consumption amount. By doing so, it is possible to increase added value for the user by aiming to visualize a fuel reduction effect by the wind power propulsion unit.

### Brief Description of the Reference Symbols

- 1: vessel
- 10: wind power propulsion unit
- 50: information processing apparatus
- 51: information acquisition unit
- 52: route calculation unit
- 64: output unit (display unit)

## Claims

1. An information processing apparatus (50) that calculates a route of a vessel (1) including a wind power propulsion unit (10, 10A, 10B, 10C, 10D) configured to propel a hull (11) by wind power, the information processing apparatus (50) comprising:
an information acquisition unit (51) configured to acquire area information that is created based on operation information acquired in each area by another vessel (1B) and includes real-time information relating to at least one of weather and hydrographic condition in the area;
a route calculation unit (52) configured to calculate a route suitable for propulsion by wind power based on the area information; and
a display unit (64) configured to display a fuel consumption reduction amount obtained by the calculated route,
wherein
the route calculation unit (52) calculates the route based on sailing performance calculated in consideration of at least one of a tacking effect and a gybing effect while using a polar diagram, and
the display unit (64) displays a comparison of fuel consumption amounts between the calculated route and another route.

2. The information processing apparatus (50) according to claim 1, wherein the route calculation unit (52) evaluates the route based on the area information.

3. The information processing apparatus (50) according to claim 1, wherein the route calculation unit (52) creates a plurality of candidate routes and selects the route suitable for propulsion by wind power from among the candidate routes.

4. The information processing apparatus (50) according to claim 3, wherein the route calculation unit (52) creates the candidate route based on at least one of the area information and a weather/hydrographic condition forecast.

5. A vessel (1) comprising the information processing apparatus (50) according to any one of claims 1 to 4.

## Patentansprüche

1. Informationsverarbeitungsvorrichtung (50), die eine Route eines Schiffes (1), das eine Windkraftantriebseinheit (10, 10A, 10B, 10C, 10D), die so konfiguriert ist, dass sie einen Rumpf (11) durch Windkraft antreibt, umfasst, berechnet, wobei die Informationsverarbeitungsvorrichtung (50) umfasst:
eine Informationserfassungseinheit (51), die so konfiguriert ist, dass sie Gebietsinformationen erfasst, die auf Grundlage von Betriebsinformationen, die in jedem Gebiet von einem anderen Schiff (1B) erfasst wurden, erzeugt werden, und Echtzeitinformationen enthalten, die sich auf mindestens eines von Wetter- und hydrografischer Bedingung in dem Gebiet beziehen;
eine Routenberechnungseinheit (52), die so konfiguriert ist, dass sie eine Route, die für Antrieb durch Windkraft geeignet ist, auf Grundlage der Gebietsinformationen berechnet; und
eine Anzeigeeinheit (64), die so konfiguriert ist, dass sie eine Kraftstoffverbrauchsreduzierungsmenge, die durch die berechnete Route erzielt wurde, anzeigt,
wobei
die Routenberechnungseinheit (52) die Route auf Grundlage von Segelleistung, die unter Berücksichtigung von mindestens einem von einem Wende-Effekt und einem Halse-Effekt unter Verwendung eines Polardiagramms berechnet wird, berechnet, und
die Anzeigeeinheit (64) einen Vergleich von Kraftstoffverbrauchsmengen zwischen der berechneten Route und einer anderen Route anzeigt.

2. Informationsverarbeitungsvorrichtung (50) nach Anspruch 1, wobei die Routenberechnungseinheit (52) die Route auf Grundlage der Gebietsinformationen bewertet.

3. Informationsverarbeitungsvorrichtung (50) nach Anspruch 1, wobei die Routenberechnungseinheit (52) mehrere Routenkandidaten erzeugt und unter diesen Routenkandidaten die Route, die für Antrieb durch Windkraft geeignet ist, auswählt.

4. Informationsverarbeitungsvorrichtung (50) nach Anspruch 3, wobei die Routenberechnungseinheit (52) die Kandidatenroute auf Grundlage von mindestens einer von den Gebietsinformationen und einer Wetter-/Hydrografie-Bedingung-Prognose erzeugt.

5. Schiff (1), das die Informationsverarbeitungsvorrichtung (50) gemäß einem der Ansprüche 1 bis 4 umfasst.

## Revendications

1. Un appareil de traitement d'informations (50) qui calcule un itinéraire d'un navire (1) incluant une unité de propulsion éolienne (10, 10A, 10B, 10C, 10D) configurée pour propulser une coque (11) par de l'énergie éolienne, l'appareil de traitement d'informations (50) comprenant :
une unité d'acquisition d'informations (51) configurée pour acquérir des informations de zone qui sont créées sur la base d'informations de fonctionnement acquises dans chaque zone par un autre navire (1B) et qui comprennent des informations en temps réel relatives à au moins l'une parmi des conditions météorologiques et hydrographiques dans la zone ;
une unité de calcul d'itinéraire (52) configurée pour calculer un itinéraire pertinent pour la propulsion par énergie éolienne sur la base des informations de zone ; et
une unité d'affichage (64) configurée pour afficher une quantité de réduction de consommation de carburant obtenue grâce à l'itinéraire calculé,
dans lequel
l'unité de calcul d'itinéraire (52) calcule l'itinéraire sur la base de performances de navigation calculées en tenant compte d'au moins l'un parmi un effet de virement de bord et un effet d'empannage, tout en utilisant un diagramme polaire, et
l'unité d'affichage (64) affiche une comparaison de quantités de consommation de carburant entre l'itinéraire calculé et un autre itinéraire.

2. L'appareil de traitement d'informations (50) selon la revendication 1, dans lequel l'unité de calcul d'itinéraire (52) évalue l'itinéraire sur la base des informations de zone.

3. L'appareil de traitement d'informations (50) selon la revendication 1, dans lequel l'unité de calcul d'itinéraire (52) crée une pluralité d'itinéraires candidats et sélectionne l'itinéraire pertinent pour la propulsion par énergie éolienne parmi les itinéraires candidats.

4. L'appareil de traitement d'informations (50) selon la revendication 3, dans lequel l'unité de calcul d'itinéraire (52) crée l'itinéraire candidat sur la base d'au moins l'une parmi les informations de zone et une prévision de conditions météorologiques/hydrographiques.

5. Un navire (1) comprenant l'appareil de traitement d'informations (50) selon l'une quelconque des revendications 1 à 4.
